**Europäisches Patentamt**

(19) **European Patent Office**

**Office européen des brevets**

(11) Numéro de publication: **0 011 564**
**B1**

(12) **FASCICULE DE BREVET EUROPEEN**

(45) Date de publication du fascicule du brevet: **18.07.84**

(21) Numéro de dépôt: **79400858.1**

(22) Date de dépôt: **13.11.79**

(51) Int. Cl.³: **C 03 B 37/04,**
C 03 B 37/06, D 01 D 5/14,
D 01 D 5/18

(54) **Procédé et dispositif pour le réglage de la fabrication de fibres en matière thermoplastique.**

(30) Priorité: **14.11.78 DE 2849357**

(43) Date de publication de la demande:
**28.05.80 Bulletin 80/11**

(45) Mention de la délivrance du brevet:
**18.07.84 Bulletin 84/29**

(84) Etats contractants désignés:
**AT BE CH DE FR GB IT LU NL SE**

(56) Documents cités:
**US - A - 3 395 005**

(73) Titulaire: **ISOVER SAINT-GOBAIN**
**Les Miroirs 18, avenue d'Alsace**
**F-92400 Courbevoie (FR)**

(72) Inventeur: **Sistermann, Klaus, Dipl. Ing.**
**Am unteren Schlittberg**
**D-6725 Roemerberg (DE)**
Inventeur: **Gaertner, Hans**
**Ringstrasse 21**
**D-6701 Dannstadt (DE)**

(74) Mandataire: **Eudes, Marcel et al,**
**Saint-Gobain Recherche 39 Quai Lucien Lefranc**
**F-93304 Aubervilliers Cedex (FR)**

Courier Press, Leamington Spa, England.

### Description

L'invention a pour objet un procédé destiné à corriger les caractéristiques telles que diamètre, longueur, de fibres constituées d'une matière thermoplastique, et en particulier de fibres minérales, lors de leur fabrication par étirage de la matière thermoplastique amollie à l'aide d'un courant gazeux à haute température porté à grande vitesse, émis par un générateur possédant au moins deux brûleurs, procédé dans lequel on utilise la mesure de la température des gaz pour régler les brûleurs qui émettent ce courant gazeux.

Sur les dispositifs de mise en oeuvre d'un tel procédé, tel que celui décrit par le brevet US 3 395 005 où existe une chambre annulaire de combustion, des capteurs de température, respectivement placés dans la chambre en aval de tubes d'alimentation en gaz combustible et à la sortie de ladite chambre, agissent sur des vannes de réglage placées sur les canalisations d'alimentation en air et en combustible. Ces capteurs sont situés dans la trajectoire des gaz de combustion émis par la chambre de combustion; ils en perturbent donc la flamme, et, en particulier celui qui est placé à la sortie perturbe le courant gazeux qui agit sur les propriétés des fibres.

Les conditions sont encore plus obscures et donc plus difficiles à maîtriser, en particulier à la sortie de la chambre de combustion, lorsque celle-ci est rétrécie en forme de lèvres pour accélérer les gaz chauds. Pour éviter de perturber l'émission des gaz chauds par mise en place d'instruments de mesure aux emplacements critiques, on se contente donc en pratique de régler les débits du gaz combustible et de l'air; mais un tel réglage présente une série d'inconvénients.

Plus précisément les valeurs de consigne des débits de gaz et d'air nécessaires pour obtenir des pressions et des températures déterminées doivent être déterminées expérimentalement pour chaque dispositif; il faut donc interrompre la production des fibres pour effectuer dans la fente des brûleurs des mesures manuelles de température et de pression. D'ailleurs, même si, pour ce qui est des températures, on utilise un dispositif de mesure continue comme celui décrit par le brevet américain précité, il est difficile d'effectuer ces mesures de pression et de température du courant gazeux dans une fente qui n'a que quelques millimètres de large. Il en résulte des pertes de production et, en raison des erreurs de mesure, de mauvais réglages des brûleurs.

Comme il faut interrompre la production pour régler les brûleurs, il y a en outre un risque que l'on n'attende pas, ensuite, jusqu'à ce que l'équilibre thermique se soit établi: dans ce cas, les valeurs de la température et de la pression se modifiant ultérieurement sans que le réglage des débits corrige ce phénomène.

Enfin, les oscillations du pouvoir calorifique du combustible ne sont pas compensées et conduisant à des oscillations de la pression et de la température. Lorsqu'on utilise un gaz combustible liquéfié vaporisé de composition variable, sa dilution préalable par mélange d'air ne peut empêcher la pression et la température de varier avec sa composition: l'ajustement du pouvoir calorifique conduisant en effet à ajouter plus ou moins d'air au gaz, les différences de densité et de teneur en oxygène qui en résultent influent sur la pression et la température dans le brûleur sans que le réglage des débits compense ce phénomène.

Sur les dispositifs qui utilisant des organes centrifugeurs en combinaison avec des brûleurs engendrant des courants gazeux à haute température, les écarts ou oscillations de la pression et de la température du courant gazeux par rapport aux valeurs désirées abaissent la qualité des fibres, provoquent des rebuts et abrègent la vie des organes centrifugeurs.

D'autre part, le brevet US 3 395 005 ne prévoit pas le réglage de la pression, de sorte que les difficultés évoquées ci-dessus ne sont pas résolues.

L'invention a donc pour objet de modifier les procédés connus de façon à permettre de corriger de façon continue les caracteristiques des fibres, telles que leur diamètre, leur longueur, au cours de leur fabrication à partir de la matière thermoplastique amollie sans que les dispositifs de mesure de la pression et de la température utilisés perturbent l'écoulement des courants d'étirage de gaz à haute température et à grand vitesse.

Selon l'invention on utilise la mesure des températures des gaz d'étirage émis par au moins deux brûleurs juxtaposés, dont les zones de combustion sont distinctes mais néanmoins voisines, mais en outre on utilise la mesure des pressions de ces mêmes gaz pour régler ces brûleurs, lesdites mesures de température et de pression étant effectuées dans l'intervalle séparant les zones de combustion des brûleurs. On peut ainsi connaître de façon continue les valeurs de la pression et de la température dans les chambres de combustion: il a été constaté que les températures et pressions mesurées sont étroitement parallèles aux températures et pressions sur les lèvres de sortie des brûleurs; ceci reste valable quand les brûleurs en question alimentent une lèvre annulaire.

Un dispositif pour la mise en oeuvre du procédé conforme à l'invention comprend normalement un minimum de deux brûleurs pour engendrer les courants gazeux à haute température, qui sont portés à vitesse élevée par des tuyères prévues à la sortie des brûleurs, et il se caractérise en ce que les chambres de combustion desdits brûleurs sont juxtaposées et séparées entre elles par des cloisons percées par des canaux de liaison dans lesquels sont logés des organes de mesure de la température et de la pression. Dans ce but, il est particulièrement avantageux, selon une autre caractéristique de l'invention, de placer le canal qui reçoit le dispositif de mesure de température plus près de la tuyère de sortie que celui qui est utilisé pour la mesure de la pression.

Le procédé et le dispositif selon l'invention permettent d'obtenir de façon continue des mesures de la pression et de la température dans les chambres de combustion, qui suivent étroitement, sans retard appréciable, les valeurs correspondantes sur la fente de sortie des brûleurs, et de régler séparément ces valeurs de la pression et de la température, donc les valeurs correspondantes à la sortie des brûleurs, en agissant sur les températures de l'air et sur les pressions du gaz qui alimentent ces brûleurs. De cette manière on peut en outre, dans le domaine techniquement nécessaire, modifier la vitesse de sortie des courants gazeux, en agissant sur leur pression à température constante et optimale et modifier ainsi le micronaire des fibres fabriquées sans interrompre la production, pour le porter à une nouvelle valeur constante désirée.

Les interruptions de production ne manquaient pas jusqu'ici de provoquer sur les appareils de fabrication des fibres des chocs thermiques qui provenaient de ce que l'alimentation en matière thermoplastique relativement plus froide que le courant gazeux était interrompue pour les réglages alors que la température de ce courant gazeux lui-même n'était pas modifiée. Les élévations de température qui en résultaient sont donc supprimées puisque la température de l'organe d'émission des gaz se règle d'elle-même.

En outre l'invention permet de régler automatiquement la température et la pression des brûleurs aux valeurs désirées, ce qui permet d'effectuer un réglage de l'ensemble du processus de mise en route et d'arrêt du dispositif de fabrication des fibres. On économise ainsi de la main d'oeuvre, on gagne du temps de fabrication, et ceci tout particulièrement lorsqu'il est nécessaire de mettre en route simultanément plusieurs appareils; enfin, on évite des dégâts dus à des manipulations intempestives.

Les dessins montrent:

Figure 1: une section par le milieu, selon la ligne A—A des figures 2 et 3, d'un générateur annulaire, dont une moitié a été enlevée pour la simplification du dessin,

Figure 2: une coupe selon la ligne B—B de la figure 1,

Figure 3: une coupe selon la ligne C—C de la figure 1.

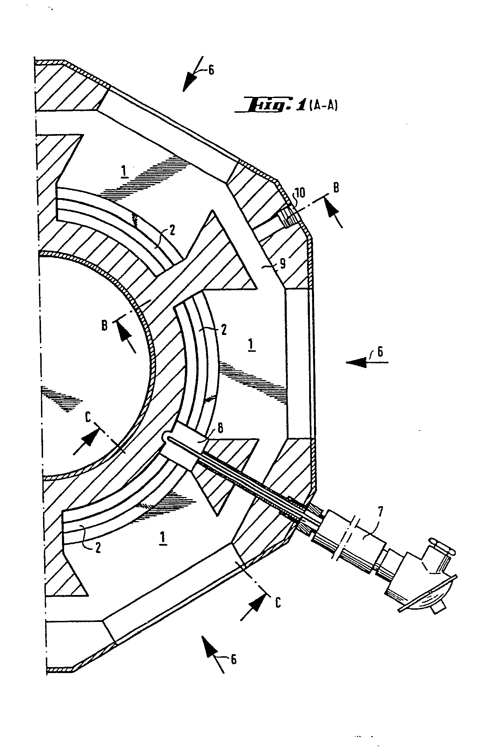

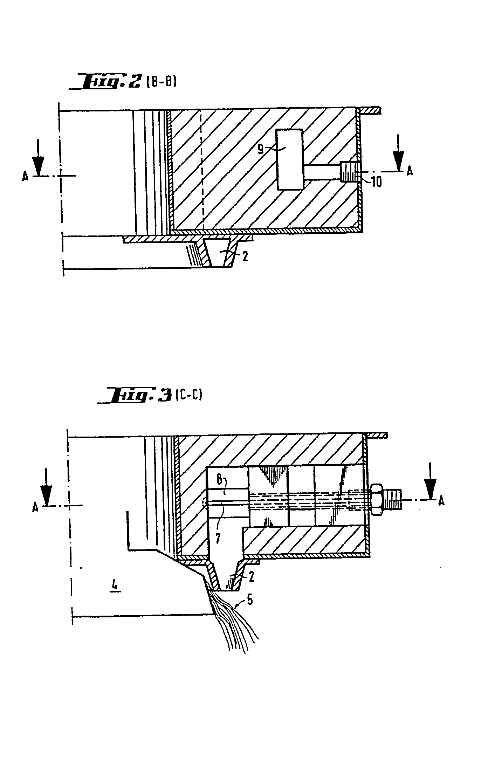

Le générateur annulaire représenté dans les dessins comprend des chambres de combustion 1 qui sont avantageusement réparties à intervalles réguliers le long d'une chambre annulaire et qui débouchent dans des tuyères de sortie de gaz 2 dirigées vers la matière en fusion en forme de filaments 5, par exemple des filets de verre en fusion sortant du corps d'un centrifugeur représenté d'une façon très schématique en 4 sur la figure 3. Un mélange de gaz et d'air est amené vers les chambres de combustion 1 ainsi que l'indiquent schématiquement les pointes de flèches représentées en 6, mélange qui brûle dans les chambres 1, projetant à travers les tuyères de sortie 2 des gaz de combustion à température élevée qui étirent les filets de verre 5 en fibres fines recueillies, de façon à former des matelas ou couches analogues, par un dispositif collecteur disposé sous l'anneau des brûleurs.

Les figures 1 et 3 montrent un thermocouple 7 qui débouche dans le canal de liaison 8 et permet ainsi de mesurer la température entre les flammes dans les chambres de combustion 1 voisines. Un second canal de liaison 9 permet d'effectuer une mesure de pression, représentée en 10 sur les figures 1 et 2, de façon seulement schématique, ce qui permet également de mesurer la pression entre les flammes de deux chambres de combustion voisines.

## Revendications

1. Procédé pour corriger les caractéristiques, telles que diamètre ou longueur, de fibres constituées d'un matière thermoplastique, en particulier de fibres minérales, lors de leur fabrication par étirage de la matière thermoplastique amollie à l'aide d'un courant gazeux à haute température et grande vitesse, émis par au moins deux brûleurs juxtaposés, dont les zones de combustion sont distinctes mais néanmoins voisines, procédé dans lequel on utilise la mesure des températures des gaz pour régler les brûleurs, caractérisé en ce que l'on utilise en outre la mesure des pressions des gaz pour régler les brûleurs et en ce que les mesures de température et de pression sont effectuées dans les intervalles séparant les zones de combustion desdits brûleurs.

2. Procédé selon la revendication 1, caractérisé en ce que l'on effectue la mesure de la pression en amont de la mesure des températures.

3. Dispositif pour la mise en oeuvre du procédé suivant la revendication 1, possédant au moins deux brûleurs, pour engendrer les courants gazeux à haute température portés à vitesse élevée par des tuyères prévues à la sortie des brûleurs, caractérisé en ce que les chambres de combustion (1) desdits brûleurs sont juxtaposées et séparées entre elles par des cloisons percées par des canaux de liaison (8, 9) dans lesquels sont logés des organes (7, 10) de mesure de la température et de la pression.

4. Dispositif suivant la revendication 3, caractérisé en ce que le canal de liaison (8) recevant l'organe (7) de mesure des températures est placé plus près de la tuyère de sortie (2) que le canal (9) recevant l'organe (10) de mesure des pressions.

## Patentansprüche

1. Verfahren zur Beeinflussung der Eigenschaften, wie Durchmesser oder Länge, von Fasern aus thermoplastischem Material, insbesondere von Mineralfasern, während ihrer Herstellung durch Ausziehen des erweichten thermoplastischen Materials mittels eines Gasstromes hoher Temperatur und großer Geschwindigkeit, erzeugt durch mindestens zwei nebeneinander angeordneten Brennern, deren Verbrennungszonen zwar eigenständig aber dennoch durch benachbart sind, wobei die Messung der Gastemperaturen zum Regulieren der Brenner verwendet wird, dadurch gekennzeichnet, daß zusätzlich die Messung der Gasdrücke zum Regulieren der Brenner verwendet wird und daß die Messungen der Temperatur und des Druckes innerhalb der Abstände zwischen den Verbrennungszonen der besagten Brenner durchgeführt werden.

2. Verfahren nach Anspruch 1, dadurch gekennzeichnet, daß die Druckmessung in Strömungsrichtung vor der Temperaturmessung durchgeführt wird.

3. Vorrichtung zur Durchführung des Verfahrens nach Anspruch 1, welche mindestens zwei Brenner aufweist, um Gasströme hoher Temperatur zu erzeugen die durch an den Brennern vorgesehenen Düsen auf hohe Geschwindigkeiten beschleunigt werden, dadurch gekennzeichnet, daß die nebeneinander liegenden Verbrennungskammern (1) der besagten Brenner durch Trennwände voneinander getrennt sind, durch die Verbindungskanäle (8, 9) verlaufen, in denen sich die Druck- und Temperaturmeßglieder (7, 10) befinden.

4. Vorrichtung nach Anspruch 3, dadurch gekennzeichnet, daß der das Temperaturmeßglied (7) aufnehmende Verbindungskanal (8) in engerer Nachbarschaft zur Austrittsdüse (2) angeordnet ist als der das Druckmeßglied (10) aufnehmende Kanal (9).

## Claims

1. Process for correcting the characteristics, such as diameter or length, of fibres consisting of a thermoplastic material, in particular mineral fibres, at the time of their manufacture by attenuation of the softened thermoplastic material by means of a gas current at high temperature and high velocity emitted from at least two juxtaposed burners whose combustion zones are separate but nevertheless close together, in which process measurement of temperature of the gas is employed to regulate the burners, characterised in that measurement of pressure of the gas is also employed to regulate the burners and in that the measurements of temperature and pressure are carried out in the space separating the combustion zones of the said burners.

2. Process according to claim 1, characterised in that the pressure is measured upstream of the measurement of temperature.

3. Apparatus for carrying out the process according to claim 1, comprising at least two burners to produce the gas currents at high temperature carried at a high speed through nozzles provided at the outlet of the burners, characterised in that the combustion chambers (1) of the said burners are juxtaposed and separated by partitions perforated by connecting channels (8, 9) in which instruments (7, 10) are situated for measuring the temperature and the pressure.

4. Apparatus according to claim 3, characterised in that the connecting channel (8) containing the temperature measuring instrument (7) is placed closer to the outlet nozzle (2) than the channel (9) containing the pressure measuring instrument (10).

0 011 564

Fig. 1 (A-A)

*Fig. 2* (B-B)

*Fig. 3* (C-C)